# EUROPÄISCHE PATENTSCHRIFT

(11) **EP 3 580 806 B1**
(45) Veröffentlichungstag und Bekanntmachung des Hinweises auf die Patenterteilung: **09.12.2020**
(21) Anmeldenummer: 18706202.1
(22) Anmeldetag: 01.02.2018
(51) Int. Cl.: H01M 10/42, H01M 10/44, H01M 10/46, H02J 7/00, H02J 50/10, H01F 38/14

(54) **AKKUVORRICHTUNG**
BATTERY DEVICE
SYSTÈME DE BATTERIE

(30) Priorität: 10.02.2017 DE 102017202167
(43) Veröffentlichungstag der Anmeldung: 18.12.2019
(73) Patentinhaber: Robert Bosch GmbH, 70442 Stuttgart (DE)
(72) Erfinder: MACK, Juergen, 73035 Goeppingen (DE); KRUPEZEVIC, Dragan, 70565 Stuttgart (DE); GONDA, Martin, 77815 Buehl (DE); LOHR, Guenter, 70771 Leinfelden-Echterdingen (DE)
(86) Internationale Anmeldenummer: PCT/EP2018/052514
(87) Internationale Veröffentlichungsnummer: WO 2018/145988

(56) Entgegenhaltungen:
- DE-A1-102013 226 232
- JP-A- 2004 028 777
- US-A1- 2013 302 660
- US-B1- 6 781 347

## Beschreibung

### Stand der Technik

Es ist bereits eine Akkuvorrichtung mit einer Akkuzelleneinheit und zumindest einer Induktionsschnittstelle vorgeschlagen worden, welche in zumindest einem Empfangsbetriebszustand dazu vorgesehen ist, elektrische Energie zur Aufladung der Akkuzelleneinheit mittels Induktion zu empfangen. Relevanter Stand der Technik ist in der Druckschrift JP 2004 028777 A offenbart.

### Offenbarung der Erfindung

Die Erfindung ist durch die Ansprüche definiert und geht aus von einer Akkuvorrichtung mit einer Akkuzelleneinheit und zumindest einer Induktionsschnittstelle, welche in zumindest einem Empfangsbetriebszustand dazu vorgesehen ist, elektrische Energie zur Aufladung der Akkuzelleneinheit mittels Induktion zu empfangen.

Es wird vorgeschlagen, dass die Akkuvorrichtung zumindest einen elektrischen Verbraucher umfasst, der dazu vorgesehen ist, oberhalb eines definierten Ladezustands der Akkuzelleneinheit aktiviert zu werden. Dadurch kann ein Überladen, insbesondere durch Wake-up- und/oder Sync-Pulse, vorteilhaft vermieden werden. Weiterhin kann der Ladezustand bedarfsweise reduziert werden.

Unter einer "Akkuvorrichtung" soll in diesem Zusammenhang insbesondere eine Vorrichtung verstanden werden, welche insbesondere zu einem zumindest temporären Speichern elektrischer Energie vorgesehen ist. Vorzugsweise soll darunter insbesondere eine wiederaufladbare Energiespeichervorrichtung verstanden werden. Unter einer "Akkuzelleneinheit" soll in diesem Zusammenhang insbesondere eine wiederaufladbare Energiespeichereinheit mit zumindest einer Akkuzelle verstanden werden, welche zu einer Aufladung durch eine Einleitung eines Ladestroms und/oder zu einer zumindest temporären Speicherung elektrischer Energie vorgesehen ist. Insbesondere kann die Akkuzelleneinheit mindestens einen Akkuzellenblock aufweisen, in dem mehrere Akkuzellen parallel und/oder in Reihe geschaltet sind.

Unter einer "Akkuzelle" soll insbesondere eine Einheit verstanden werden, die zu einer elektrochemischen Speicherung elektrischer Energie mittels einer reversiblen Reaktion vorgesehen ist. Die Akkuzelle kann beispielsweise von einer Bleiackuzelle, einer NiCd-Akkuzelle, einer NiMH-Akkuzelle, bevorzugt jedoch von einer lithiumbasierten Akkuzelle, gebildet sein. Die Akkuzelle kann von Akkuzellen unterschiedlicher Nennspannungen gebildet sein, beispielsweise Nennspannungen von 1,2 V, 1,5 V oder 3,6 V. Bevorzugt weist die Akkuzelle eine Zylinderform auf. Die Akkuzelleneinheit kann mehrere Akkuzellen aufweisen, die parallel und/oder in Reihe geschaltet sind, um eine höhere Gesamtkapazität und/oder eine höhere Gesamtspannung der Akkuvorrichtung zu erreichen. Beispielsweise kann die Akkuzelleneinheit eine Akkuzelle mit einer Spannung von 3,6 V, zwei in Reihe geschaltete Akkuzellen mit einer Spannung von jeweils 3,6 V für eine Gesamtspannung der Akkuvorrichtung von 7,2 V, oder drei in Reihe geschaltete Akkuzellen mit einer Spannung von jeweils 3,6 V für eine Gesamtspannung der Akkuvorrichtung von 10,8 V aufweisen.

Unter einer "Induktionsschnittstelle" soll insbesondere eine elektronische Einheit verstanden werden, welche in einem Empfangsbetriebszustand dazu vorgesehen ist, zur Aufladung der Akkuzelleneinheit elektrische Energie über Induktion von zumindest einem Sender zu empfangen, diese umzuformen und/oder aufzubereiten und der Akkuzelleneinheit zuzuführen. Bevorzugt umfasst die zumindest eine Induktionsschnittstelle zumindest eine Induktionsspule. Insbesondere ist die Induktionsspule dazu vorgesehen, ein elektromagnetisches Wechselfeld in einen elektrischen Wechselstrom umzuwandeln. Bevorzugt weist das Wechselfeld eine Frequenz von 10 - 500 kHz, besonders bevorzugt von 100 - 150 kHz, auf. Insbesondere ist die Richtung senkrecht zu der Spulenebene parallel zu einer Wicklungsachse der Induktionsspule ausgebildet.

Unter einer "Induktionsspule" soll in diesem Zusammenhang insbesondere eine Spule mit zumindest einer Wicklung aus einem elektrisch leitenden Material verstanden werden, die dazu vorgesehen ist, in einen Empfangsbetriebszustand der Induktionsschnittstelle elektrische Energie, die durch eine Induktionsspule eines Induktivladegeräts übertragen wird, zu empfangen und über eine Ladeelektronik einer Akkuzelle zuzuführen. Insbesondere besteht die Induktionsspule zumindest teilweise aus einem elektrischen Leiter, insbesondere einem gewickelten elektrischen Leiter, der insbesondere zumindest teilweise in Form einer Kreisscheibe angeordnet ist.

Unter einer "Ladeelektronik" soll insbesondere eine Elektronikeinheit verstanden werden, die dazu vorgesehen ist, eine Aufladung von Akkuzellen zu steuern und die insbesondere Elektronikelemente zu einer Spannungstransformation aufweist. Insbesondere kann die Akkuvorrichtung ferner ein Akkugehäuse aufweisen. Unter einem "Akkugehäuse" soll insbesondere eine Baugruppe verstanden werden, die mindestens ein Gehäusebauteil umfasst, das die Akkuvorrichtung zumindest teilweise mit äußeren Wandungen gegenüber einer Umgebung begrenzt und gegenüber der Umgebung schützt um eine Beschädigung und/oder eine Verschmutzung zu vermeiden.

Der zumindest eine elektrische Verbraucher umfasst vorzugsweise zumindest einen elektrischen Widerstand und/oder eine Schaltungssteuerung zur Aktivierung und/oder Veränderung des zumindest einen elektrischen Widerstands. Insbesondere ist der zumindest eine elektrische Verbraucher zu einer Vermeidung einer Überladung der Akkuzelleneinheit vorgesehen.

Unter einem "Ladezustand" soll in diesem Zusammenhang insbesondere eine elektrische Spannung und/oder eine Kapazität der Akkuzelleneinheit verstanden werden. Unter "aktiviert" soll in diesem Zusammenhang insbesondere derart zugeschaltet verstanden werden, dass ein elektrischer Kreis mit der zumindest einen Akkuzelleneinheit geschlossen ist. Insbesondere ist der elektrische Verbraucher dazu vorgesehen, unterhalb des definierten Ladezustands deaktiviert zu werden. Die Wake-up- und/oder Sync-Pulse werden insbesondere von einem Induktivladegerät zur Aktivierung, Informationsübertragung oder Synchronisation mit der Akkuvorrichtung erzeugt. Die Wake-up- und/oder Sync-Pulse übertragen Energie auf die Induktionsschnittstelle der Akkuvorrichtung. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

In einer weiteren Ausgestaltung der Erfindung wird vorgeschlagen, dass der zumindest eine elektrische Verbraucher dazu vorgesehen ist, eine Erhöhung des Ladezustands oberhalb des definierten Ladezustands zu vermeiden. Dadurch kann vorteilhaft erreicht werden, dass der definierte Ladezustand auch bei Wake-up- und/oder Sync-Pulsen nicht oder nur unwesentlich überschritten wird.

Weiterhin wird vorgeschlagen, dass der zumindest eine elektrische Verbraucher dazu vorgesehen ist, oberhalb des definierten Ladezustands über die Induktionsschnittstelle, insbesondere mittels Wake-up- und/oder Sync-Pulsen, zugeführte Energie zumindest teilweise zu verbrauchen. Dadurch kann ungewollt, überschüssig zugeführte elektrische Energie der Akkuzelleneinheit vorteilhaft entzogen werden. Vorteilhaft wird die zugeführte Energie zumindest im Wesentlichen, besonders bevorzugt vollständig vom elektrischen Verbraucher verbraucht, insbesondere innerhalb eines Intervalls zwischen zwei Wake-up- und/oder Sync-Pulsen.

Erfindungsgemäß wird vorgeschlagen, dass die Akkuvorrichtung eine Eingabeeinheit umfasst, über welche der definierte Ladezustand, insbesondere von einem Anwender, einstellbar ist. Dadurch kann der definierte Ladezustand vorteilhaft individuell eingestellt werden. Insbesondere ist der definierte Ladezustand über die Eingabeeinheit werksseitig einstellbar und/oder von einem Endnutzer einstellbar. Die Eingabeeinheit kann hierbei Eingabemittel, wie insbesondere Bedienknöpfe, eine berührungsempfindliche Oberfläche, ein Stellrad und/oder eine elektrische Schnittstelle zum Anschluss eines externen Eingabemittels, wie insbesondere eines Computers, eines Smartphones und/oder einer Tastatur umfassen.

Ferner wird vorgeschlagen, dass der definierte Ladezustand als ein maximaler Ladezustand der Akkuzelleneinheit festgelegt ist. Dadurch kann eine Beschädigung der Akkuzelleneinheit durch eine Überspannung vorteilhaft vermieden werden. Der maximale Ladezustand ist hierbei eine höchstzulässige Spannung oder zumindest 95 % der höchstzulässigen Spannung. Alternativ ist der maximale Ladezustand eine höchstzulässige Kapazität oder zumindest 95 % der höchstzulässigen Kapazität. Die Akkuzelleneinheit kann oberhalb des maximalen Ladezustands, insbesondere langfristig, irreparable Schäden nehmen.

Des Weiteren wird vorgeschlagen, dass der definierte Ladezustand unterhalb eines maximalen Ladezustands der Akkuzelleneinheit festgelegt ist. Dadurch kann insbesondere ein für eine Lagerung vorteilhafter Ladezustand erzielt werden. Bevorzugt beträgt der definierte Ladezustand zwischen 70% und 90% eines maximalen Ladezustands der Akkuzelleneinheit.

Zudem wird vorgeschlagen, dass der elektrische Verbraucher dazu vorgesehen ist, die Akkuzelleneinheit, insbesondere in einem Entladebetrieb, bis zu einem Erreichen eines bestimmten Ladezustands zu entladen. Dadurch kann nach Bedarf ein Ladezustand reduziert werden, insbesondere für eine Kapazitätsmessung, einen Transport und/oder eine Lagerung. Der bestimmte Ladezustand ist frei einstellbar oder festgelegt. Der bestimmte Ladezustand kann insbesondere gleich groß wie der definierte Ladezustand oder kleiner als der definierte Ladezustand sein.

Ferner wird ein System mit zumindest einer erfindungsgemäßen Akkuvorrichtung und mit einem Induktivladegerät vorgeschlagen, das zu einer Zustandsüberwachung der zumindest einen Akkuvorrichtung, insbesondere mittels Wake-up- und/oder Sync-Pulsen, vorgesehen ist. Hierdurch kann vorteilhaft eine Zustandsüberwachung, insbesondere eine Anwesenheitsüberwachung, eine Kapazitätsüberwachung und/oder eine Informationsabfrage erfolgen, bei gleichzeitig hohem Schutz der Akkuzelleneinheit vor einer Beschädigung, insbesondere durch eine Überladung.

Zudem wird ein Verfahren zum Betrieb einer Akkuvorrichtung mit einer Akkuzelleneinheit und zumindest einer Induktionsschnittstelle vorgeschlagen, mittels welcher in zumindest einem Empfangsbetriebszustand elektrische Energie zur Aufladung der Akkuzelleneinheit mittels Induktion empfangen wird, wobei zumindest ein elektrischer Verbraucher der Akkuvorrichtung eine Überladung der Ackuzelleneinheit, insbesondere eine Überladung der Akkuzelleneinheit durch Wake-up- und/oder Sync-Pulse, vermeidet, wobei über eine Eingabeeinheit ein definiert Ladezustand, insbesondere von einem Anwender, eingestellt wird. Dadurch kann eine Beschädigung der Akkuzelleneinheit insbesondere durch Wake-up- und/oder Sync-Pulse vorteilhaft vermieden werden.

Als besonders betriebssicher wird zudem ein Elektrogerät mit einer erfindungsgemäßen Akkuvorrichtung vorgeschlagen. Insbesondere kann die Akkuvorrichtung in dem Elektrogerät in einem Aufnahmeraum des Elektrogeräts aufgenommen und/oder an dem Elektrogerät lösbar befestigt sein. Unter einem "Elektrogerät" soll in diesem Zusammenhang insbesondere ein durch einen Benutzer tragbares Elektrogerät, wie beispielswiese ein Smartphone, ein Tablet, ein Laptop, ein E-Book-Reader, eine Handwerkzeugmaschine o.dgl., verstanden werden, welches zumindest teilweise durch die Akkuvorrichtung mit elektrischer Energie versorgt wird. Hierdurch kann eine vorteilhafte Funktionalität, insbesondere hinsichtlich einer induktiven Aufnahme von elektrischer Energie, erreicht werden.

Die erfindungsgemäße Akkuvorrichtung soll hierbei nicht auf die oben beschriebene Anwendung und Ausführungsform beschränkt sein. Insbesondere kann die erfindungsgemäße Akkuvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigt:

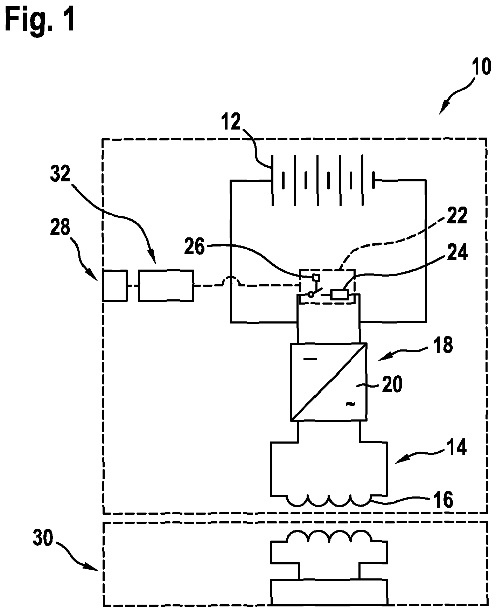

- Fig. 1: eine schematische Darstellung eines Systems mit einer Ackuvorrichtung und einem Induktivladegerät.

### Beschreibung des Ausführungsbeispiels

Figur 1 zeigt eine schematische Darstellung eines Systems mit einem Induktivladegerät 30 und einer Akkuvorrichtung 10. Das Induktivladegerät 30 ist lediglich schematisch angedeutet und auf eine dem Fachmann bekannte Weise ausgebildet. Die Akkuvorrichtung 10 ist zu einer Versorgung eines hier nicht dargestellten Elektrogeräts mit elektrischer Energie vorgesehen.

Die Akkuvorrichtung 10 weist eine Akkuzelleneinheit 12 und eine Induktionsschnittstelle 14 auf. Die Induktionsschnittstelle 14 kann in einem Empfangsbetriebszustand betrieben werden. Die Induktionsschnittstelle 14 ist in dem Empfangsbetriebszustand dazu vorgesehen, elektrische Energie zur Aufladung der Akkuzelleneinheit 12 mittels Induktion zu empfangen. Die Induktionsschnittstelle 14 weist eine Induktionsspule 16 auf, welche dazu vorgesehen ist, elektrische Energie zu empfangen. Die Akkuzelleneinheit 12 weist einen Akkuzellenblock auf, in dem mehrere Akkuzellen in Reihe geschaltet sind.

Die Induktionsschnittstelle 14 umfasst eine Elektronikeinheit 18, welche einen Gleichrichter 20 umfasst. Insbesondere kann die Elektronikeinheit 18 zumindest im Wesentlichen von einer Vollbrückenschaltung, insbesondere von einer MOSFET-Vollbrückenschaltung, gebildet sein. Der Gleichrichter 20 ist dazu vorgesehen, im Empfangsbetriebszustand der Induktionsschnittstelle 14 eine an der Induktionsspule 16 induzierte Wechselspannung für die Akkuzelleneinheit 12 in eine Gleichspannung zu wandeln, um ein Aufladen der Akkuzelleneinheit 12 zu ermöglichen.

Die Akkuvorrichtung 10 umfasst einen elektrischen Verbraucher 22. Es ist in diesem Zusammenhang jedoch auch denkbar, dass die Akkuvorrichtung 10 mehr als einen elektrischen Verbraucher 22 umfasst. Der elektrische Verbraucher 22 ist dazu vorgesehen, oberhalb eines definierten Ladezustands der Akkuzelleneinheit 12 aktiviert zu werden. Der elektrische Verbraucher 22 umfasst einen elektrischen Widerstand 24. Der elektrische Verbraucher 22 umfasst ferner eine Schaltungssteuerung 26 zur Aktivierung des elektrischen Widerstands 24. Die Schaltungssteuerung 26 kann hierzu zumindest einen nicht näher dargestellten Sensor und/oder eine Rechnereinheit 32 umfassen.

Der elektrische Verbraucher 22 ist zu einer Vermeidung einer Überladung der Akkuzelleneinheit 12 vorgesehen. Hierzu wird eine Spannung der Akkuzelleneinheit 12 von der Schaltungssteuerung 26 erfasst. Bei einem überschreiten der erfassten Spannung über eine definierte Maximalspannung wird der elektrische Widerstand 24 aktiviert. Hierbei wird ein Stromkreis zwischen einem Pluspol und einem Minuspol der Akkuzelleneinheit 12 geschlossen. Der elektrische Verbraucher 22 wandelt dabei elektrische Energie der Akkuzelleneinheit 12 in thermische Energie um. Der elektrische Verbraucher 22 weist eine Heizleistung von mehr als 0,1 W auf. Es ist in diesem Zusammenhang jedoch auch denkbar, dass der elektrische Verbraucher 22 eine Heizleistung von mehr als 1 W oder von mehr als 10 W aufweist. Weiterhin ist es denkbar, dass der elektrische Verbraucher 22 einen Kühlkörper, insbesondere Kühlrippen, zu einer Wärmeableitung umfasst. Der elektrische Verbraucher 22 ist innerhalb eines selben Gehäuses wie die Ackuzelleneinheit 12 angeordnet.

Der elektrische Verbraucher 22 ist dazu vorgesehen, eine Erhöhung des Ladezustands oberhalb des definierten Ladezustands zu vermeiden. Der elektrische Verbraucher 22 ist dazu vorgesehen, oberhalb des definierten Ladezustands über die Induktionsschnittstelle 14 mittels Wake-up- und/oder Sync-Pulsen zugeführte Energie vollständig zu verbrauchen. Genauer gesagt, wird die zugeführte Energie vollständig vom elektrischen Verbraucher 22 innerhalb eines Intervalls zwischen zwei Wake-up- und/oder Sync-Pulsen verbraucht.

Die Akkuvorrichtung 10 umfasst eine Eingabeeinheit 28. Die Eingabeeinheit 28 ist mit der Rechnereinheit 32 gekoppelt, die zu einer Festlegung des definierten Ladezustands festgelegt ist. Die Eingabeeinheit 28 bildet beispielhaft eine elektrische Schnittstelle zum Anschluss, insbesondere zum drahtlosen Anschluss, eines externen Eingabemittels, wie insbesondere eines Computers, eines Smartphones und/oder einer Tastatur. Über die Eingabeeinheit 28 ist der definierte Ladezustand von einem Anwender und/oder werksseitig einstellbar. Der definierte Ladezustand ist als ein maximaler Ladezustand der Akkuzelleneinheit 12 festgelegt. Alternativ ist der definierte Ladezustand unterhalb eines maximalen Ladezustands der Akkuzelleneinheit 12 festgelegt. Hierbei kann der definierte Ladezustand beispielhaft auf einen Wert zwischen 70% und 90% eines maximalen Ladezustands der Akkuzelleneinheit 12 festgelegt sein.

Der elektrische Verbraucher 22 ist dazu vorgesehen, die Akkuzelleneinheit 12 in einem Entladebetrieb bis zu einem Erreichen eines bestimmten Ladezustands zu entladen. Der bestimmte Ladezustand kann fest vorgegeben oder von der Eingabeeinheit 28 einstellbar sein. Beispielhaft ist der bestimmte Ladezustand auf einen geringstmöglichen Ladezustand der Akkuzelleneinheit 12 festgelegt. Unterhalb des geringstmöglichen Ladezustands der Akkuzelleneinheit 12 nimmt die Akkuzelleneinheit 12 Schäden. Um eine Kapazität der Akkuzelleneinheit 12 zu messen, wird die Akkuzelleneinheit 12 über den elektrischen Verbraucher 22 bis zum bestimmten Ladezustand entladen. Anschließend wird die Akkuzelleneinheit 12 vollständig aufgeladen und die Menge an zugeführter Energie gemessen.

Das Induktivladegerät 30 ist zu einem induktiven Laden der Akkuvorrichtung 10 vorgesehen. Das Induktivladegerät 30 ist zu einer Zustandsüberwachung der Akkuvorrichtung 10 mittels Wake-up- und/oder Sync-Pulsen vorgesehen. Bei einem Betrieb der Akkuvorrichtung 10 wird elektrische Energie zur Aufladung der Akkuzelleneinheit 12 mittels Induktion empfangen. Der elektrische Verbraucher 22 der Akkuvorrichtung 10 vermeidet eine Überladung der Akkuzelleneinheit 12. Der elektrische Verbraucher 22 der Akkuvorrichtung 10 vermeidet insbesondere eine Überladung der Akkuzelleneinheit 12 durch Wake-up- und/oder Sync-Pulse.

## Patentansprüche

1. Akkuvorrichtung (10) mit einer Akkuzelleneinheit (12), mit zumindest einer Induktionsschnittstelle (14), weiche in zumindest einem Empfangsbetriebszustand dazu vorgesehen ist, elektrische Energie zur Aufladung der Ackuzelleneinheit (12) mittels Induktion zu empfangen und mit zumindest einem elektrischen Verbraucher (22), **gekennzeichnet durch** eine Eingabeeinheit (28), über welche ein definierter Ladezustand der Akkuzelleneinheit (12), insbesondere von einem Anwender, einstellbar ist, wobei der elektrische Verbraucher (22) dazu vorgesehen ist, oberhalb des definierten Ladezustands der Akkuzelleneinheit (12) aktiviert zu werden.

2. Akkuvorrichtung (10) nach Anspruch 1, **dadurch gekennzeichnet, dass** der zumindest eine elektrische Verbraucher (22) dazu vorgesehen ist, eine Erhöhung des Ladezustands oberhalb des definierten Ladezustands zu vermeiden.

3. Akkuvorrichtung (10) nach Anspruch 1 oder 2, **dadurch gekennzeichnet, dass** der zumindest eine elektrische Verbraucher (22) dazu vorgesehen ist, oberhalb des definierten Ladezustands über die Induktionsschnittstelle (14), insbesondere mittels Wake-up- und/oder Sync-Pulsen, zugeführte Energie zumindest teilweise zu verbrauchen.

4. Akkuvorrichtung (10) nach einem der vorhergehenden Ansprüche,
**dadurch gekennzeichnet, dass** der definierte Ladezustand als ein maximaler Ladezustand der Akkuzelleneinheit (12) festgelegt ist.

5. Akkuvorrichtung (10) nach einem der Ansprüche 1 bis 3, **dadurch gekennzeichnet, dass** der definierte Ladezustand unterhalb eines maximalen Ladezustands der Akkuzelleneinheit (12) festgelegt ist.

6. Akkuvorrichtung (10) nach einem der vorhergehenden Ansprüche, **dadurch gekennzeichnet, dass** der elektrische Verbraucher (22) dazu vorgesehen ist, die Akkuzelleneinheit (12), insbesondere in einem Entladebetrieb, bis zu einem Erreichen eines bestimmten Ladezustands zu entladen.

7. System mit zumindest einer Akkuvorrichtung (10) nach einem der vorhergehenden Ansprüche und mit einem Induktivladegerät (30), das zu einer Zustandsüberwachung der zumindest einen Akkuvorrichtung (10), insbesondere mittels Wake-up- und/oder Sync-Pulsen, vorgesehen ist.

8. Verfahren zum Betrieb einer Akkuvorrichtung (10), insbesondere nach einem der Ansprüche 1 bis 6, mit einer Akkuzelleneinheit (12) und zumindest einer Induktionsschnittstelle (14), mittels welcher in zumindest einem Empfangsbetriebszustand elektrische Energie zur Aufladung der Akkuzelleneinheit (12) mittels Induktion empfangen wird, wobei zumindest ein elektrischer Verbraucher (22) der Akkuvorrichtung (10) eine Überladung der Ackuzelleneinheit (12), insbesondere eine Überladung der Akkuzelleneinheit (12) durch Wake-up- und/oder Sync-Pulse, vermeidet, **dadurch gekennzeichnet, dass** über eine Eingabeeinheit (28) ein definierter Ladezustand, insbesondere von einem Anwender, eingestellt wird.

9. Elektrogerät mit zumindest einer Akkuvorrichtung (10) nach einem der Ansprüche 1 bis 6.

## Claims

1. Rechargeable battery apparatus (10) comprising a rechargeable battery cell unit (12), comprising at least one induction interface (14) which is provided, in at least one receiving operating state, to receive electrical energy for charging the rechargeable battery cell unit (12) by means of induction, and comprising at least one electrical load (22), **characterized by** an input unit (28) via which a defined state of charge of the rechargeable battery cell unit (12) can be set, in particular by a user, wherein the electrical load (22) is intended to be activated above the defined state of charge of the rechargeable battery cell unit (12).

2. Rechargeable battery apparatus (10) according to Claim 1, **characterized in that** the at least one electrical load (22) is provided to prevent an increase in the state of charge above the defined state of charge.

3. Rechargeable battery apparatus (10) according to Claim 1 or 2, **characterized in that** the at least one electrical load (22) is provided to at least partially consume energy supplied via the induction interface (14), in particular by means of wake-up and/or sync pulses, above the defined state of charge.

4. Rechargeable battery apparatus (10) according to one of the preceding claims, **characterized in that** the defined state of charge is defined as a maximum state of charge of the rechargeable battery cell unit (12).

5. Rechargeable battery apparatus (10) according to one of Claims 1 to 3, **characterized in that** the defined state of charge is defined below a maximum state of charge of the rechargeable battery cell unit (12).

6. Rechargeable battery apparatus (10) according to one of the preceding claims, **characterized in that** the electrical load (22) is provided to discharge the rechargeable battery cell unit (12), in particular in a discharge mode, until a specific state of charge is achieved.

7. System comprising at least one rechargeable battery apparatus (10) according to one of the preceding claims and comprising an inductive charging device (30) which is provided to monitor the state of the at least one rechargeable battery apparatus (10), in particular by means of wake-up and/or sync pulses.

8. Method for operating a rechargeable battery apparatus (10), in particular according to one of Claims 1 to 6, comprising a rechargeable battery cell unit (12) and at least one induction interface (14) by means of which electrical energy for charging the rechargeable battery cell unit (12) is received by means of induction in at least one receiving operating state, wherein at least one electrical load (22) of the rechargeable battery apparatus (10) prevents excessive charging of the rechargeable battery cell unit (12), in particular excessive charging of the rechargeable battery cell unit (12) by wake-up and/or sync pulses, **characterized in that** a defined state of charge is set, in particular by a user, via an input unit (28).

9. Electrical device comprising at least one rechargeable battery apparatus (10) according to one of Claims 1 to 6.

## Revendications

1. Dispositif accumulateur (10) doté d'une unité de cellule d'accumulateur (12), comprenant au moins une interface à induction (14) qui, dans au moins un état opérationnel de réception, est conçue pour recevoir de l'énergie électrique destinée à charger l'unité de cellule d'accumulateur (12) au moyen de l'induction, et comprenant au moins un récepteur électrique (22), **caractérisé par** une unité de saisie (28), par le biais de laquelle peut être réglé un état de charge défini de l'unité de cellule d'accumulateur (12), notamment par un utilisateur, le récepteur électrique (22) étant conçu pour être activé au-dessus de l'état de charge défini de l'unité de cellule d'accumulateur (12).

2. Dispositif accumulateur (10) selon la revendication 1, **caractérisé en ce que** l'au moins un récepteur électrique (22) est conçu pour éviter une augmentation de l'état de charge au-dessus de l'état de charge défini.

3. Dispositif accumulateur (10) selon la revendication 1 ou 2, **caractérisé en ce que** l'au moins un récepteur électrique (22) est conçu pour, au-dessus de l'état de charge défini, consommer au moins partiellement l'énergie acheminée par le biais de l'interface à induction (14), notamment au moyen d'impulsions de réveil et/ou de synchronisation.

4. Dispositif accumulateur (10) selon l'une des revendications précédentes, **caractérisé en ce que** l'état de charge défini est fixé comme un état de charge maximal de l'unité de cellule d'accumulateur (12).

5. Dispositif accumulateur (10) selon l'une des revendications 1 à 3, **caractérisé en ce que** l'état de charge défini est fixé au-dessous d'un état de charge maximal de l'unité de cellule d'accumulateur (12).

6. Dispositif accumulateur (10) selon l'une des revendications précédentes, **caractérisé en ce que** le récepteur électrique (22) est conçu pour décharger l'unité de cellule d'accumulateur (12), notamment dans un régime de décharge, jusqu'à atteindre un état de charge déterminé.

7. Système comprenant au moins un dispositif accumulateur (10) selon l'une des revendications précédentes et comprenant un chargeur inductif (30), qui est conçu pour une surveillance de l'état de l'au moins un dispositif accumulateur (10), notamment au moyen d'impulsions de réveil et/ou de synchronisation.

8. Procédé pour faire fonctionner un dispositif accumulateur (10), notamment selon l'une des revendications 1 à 6, comprenant une unité de cellule d'accumulateur (12) et au moins une interface à induction (14) au moyen de laquelle, dans au moins un état opérationnel de réception, de l'énergie électrique destinée à charger l'unité de cellule d'accumulateur (12) est reçue au moyen de l'induction, au moins un récepteur électrique (22) du dispositif accumulateur (10) évitant une surcharge de l'unité de cellule d'accumulateur (12), notamment une surcharge de l'unité de cellule d'accumulateur (12) par des impulsions de réveil et/ou de synchronisation, **caractérisé en ce qu'**un état de charge défini est réglé par le biais d'une unité de saisie (28), notamment par un utilisateur.

9. Appareil électrique comprenant au moins un dispositif accumulateur (10) selon l'une des revendications 1 à 6.
